# EUROPEAN PATENT APPLICATION

(11) **EP 4 539 471 A1**
(43) Date of publication of application: **16.04.2025**
(21) Application number: 23819887.3
(22) Date of filing: 08.06.2023
(51) Int. Cl.: H04N 21/236, H04L 7/06, H04N 21/43, H04N 21/8547

(54) **MEDIA TRANSMISSION SYSTEM, SENDING DEVICE, SENDING SYSTEM, RECEPTION DEVICE, AND RECEPTION SYSTEM**

(30) Priority: 10.06.2022 JP 2022094336
(71) Applicant: NTT Innovative Devices Corporation, Yokohama-shi, Kanagawa 221-0031 (JP)
(72) Inventor: YAMAGUCHI Takahiro, Yokohama-shi, Kanagawa 221-0031 (JP); OHNO Yoshihito, Yokohama-shi, Kanagawa 221-0031 (JP); MASUI Yuki, Yokohama-shi, Kanagawa 221-0031 (JP); ICHIGUCHI Gin, Yokohama-shi, Kanagawa 221-0031 (JP)
(74) Representative: Hoffmann Eitle
(86) International application number: PCT/JP2023/021334
(87) International publication number: WO 2023/238907

(57) **Abstract**

A media transmission system includes a media transmitting device (1) including: a video signal reception circuit (111) that receives a video signal generated in association with the timing of an alignment point, a packetization circuit (112) that converts the video signal into a plurality of packets in frames, a time stamping circuit (113) that applies a time stamp corresponding to the timing of the alignment point at the time of generation to each packet; and an IP signal transmission circuit (114) that transmits each packet as an IP signal; and the media receiving device (2) including: an IP signal reception circuit (211) that receives the packet, a depacketization circuit (212) that reproduces a frame of the video signal from the packet, an offset control circuit (213) that outputs the reproduced frame at an output timing obtained by adding an offset to the alignment point of the time stamp; and a video signal transmission circuit (214) that outputs the frame output from the offset control circuit (213).

## Description

### TECHNICAL FIELD

This disclosure relates to a media transmission system, a transmitting device, a transmitting system, a receiving device and a receiving system.

### BACKGROUND ART

In recent years, rapid progress has been made in systems that convert media signals (video signals) such as video into IP and transmit them over a network for program production. For example, Serial Digital Interface (SDI) signals, which are uncompressed video signals, are converted into IP packets and transmitted over Ethernet. Society of Motion Picture and Television Engineers (SMPTE) has been standardizing such systems and revising them as needed.

Patent Literature 1 discloses a receiver capable of adjusting the phase of a video signal with a simple configuration in an IP transmission system for video signals based on SMPTE.

Patent Literature 2 discloses a system in which encoded video signals are transmitted via the Internet or the like as IP packets in the MMT. The MMT has been provided as a new system to replace MPEG-2 TS system used for digital broadcasting.

### CITATION LIST

### PATENT LITERATURE

Patent Literature 1: Japanese Patent Application Publication No. JP2021-77940
Patent Literature 2: Japanese Patent Application Publication No. JP2018-74480

### SUMMARY OF THE INVENTION

### TECHNICAL PROBLEM

In the receiver in Patent Literature 1, the output timing of the reproduced SDI on a receiving side is a unit of an alignment point based on SMPTE_EPOCH according to the provision of SMPTE. The unit of the alignment point corresponds to a frame unit. Therefore, even if an SDI signal can be reproduced from the received IP packets, the receiving side may have to wait for the output of nearly one frame in some cases.

In the transmitter of Patent Literature 1, the boundary of the frame is detected from the RTP packet generated from the SDI signal, and the time stamp captured at that point is set to the RTP packet. That is, in a conventional transmitter, the time at which the frame of the SDI signal or the frame of the RTP packet packetized with the SDI signal is input to the circuit, is applied as a time stamp.

However, an SDI signal supplied from an external camera to a transmitter has phase fluctuations due to jitter or the like, that is, fluctuations in the timing of an edge between an active video period and a blanking period. Therefore, phase fluctuations also occur for an RTP packet and at the boundary of a frame detected from the RTP packet.

The present disclosure has been made in view of the above problems, and it is an object of the present disclosure to reduce an output delay of a video signal and to avoid degradation of video quality due to phase fluctuations of the video signal.

### SOLUTION TO PROBLEM

In order to achieve the above objects, one aspect of the present disclosure is a media transmission system including a transmitting device and a receiving device, the transmitting device including: a video signal reception circuit that receives a video signal generated with each frame corresponding to timing of an alignment point based on SMPTE_EPOCH; a packetization circuit that converts the video signal into a plurality of packets in frames; a time stamping circuit that applies a time stamp corresponding to the timing of the alignment point set to the corresponding frame at the time of generation to each packet; an IP signal transmission circuit that transmits each packet to which the time stamp is applied as an IP signal; the receiving device including: an IP signal reception circuit that receives the packet; a depacketization circuit that reproduces a frame of the video signal from the received packet; an offset control circuit that outputs the reproduced frame at an output timing obtained by adding a predetermined offset to an alignment point of the time stamp applied to the corresponding packet; and a video signal transmission circuit that outputs the frame output from the offset control circuit as the video signal.

One aspect of the present disclosure is a transmitting device in a media transmission system including a transmitting device and a receiving device, including: a video signal reception circuit that receives a video signal generated with each frame corresponding to timing of an alignment point based on SMPTE_EPOCH; a packetization circuit that converts the video signal into a plurality of packets in frames; a time stamping circuit that applies a time stamp corresponding to the timing of the alignment point set to the corresponding frame at the time of generation to each packet; an IP signal transmission circuit that transmits each packet to which the time stamp is applied as an IP signal.

One aspect of the present disclosure is a receiving device in a media transmission system including a transmitting device and a receiving device, comprising: an IP signal reception circuit that receives from the transmitting device a packet of a video signal generated with each frame corresponding to timing of an alignment point based on SMPTE_EPOCH, in which a time stamp corresponding to the timing of the alignment point set to the corresponding frame at the time of generation is applied to the packet; a depacketization circuit that reproduces a frame of the video signal from the received packets; an offset control circuit that outputs the reproduced frame at an output timing obtained by adding a predetermined offset to an alignment point of the time stamp applied to the corresponding packets; and a video signal transmission circuit that outputs the frame output from the offset control circuit as the video signal.

According to the present disclosure, an output delay of a video signal can be reduced, and degradation of the video quality due to phase fluctuations of the video signal can be avoided.

### BRIEF DESCRIPTION OF THE DRAWINGS

[FIG. 1] FIG. 1 is an overall configuration diagram of a media transmission system.
[FIG. 2] FIG. 2 is a configuration diagram of a media transmission system according to a first embodiment.
[FIG. 3] FIG. 3 is a diagram illustrating a time stamp applying method according to the first embodiment.
[FIG. 4] FIG. 4 is a diagram illustrating an output timing of a media receiving device according to the first embodiment.
[FIG. 5] FIG. 5 is an embodiment of a media transmitting device and a media receiving device.
[FIG. 6] FIG. 6 is a configuration diagram of the media transmission system according to a second embodiment.
[FIG. 7] FIG. 7 is a processing flowchart of the media transmission system according to the second embodiment.
[FIG. 8] FIG. 8 is an operation time chart of the media transmission system according to the second embodiment.
[FIG. 9] FIG. 9 shows a configuration diagram of a media transmission system according to a third embodiment.
[FIG. 10] FIG. 10 is a diagram illustrating operation of the media transmission system according to the third embodiment.
[FIG. 11] FIG. 11 is a diagram illustrating another operation of the media transmission system according to the third embodiment.

### DESCRIPTION OF EMBODIMENTS

Embodiments of the present disclosure will now be described with reference to the drawings. The same parts in the drawings are denoted by the same reference signs, and the explanation will not be repeated.

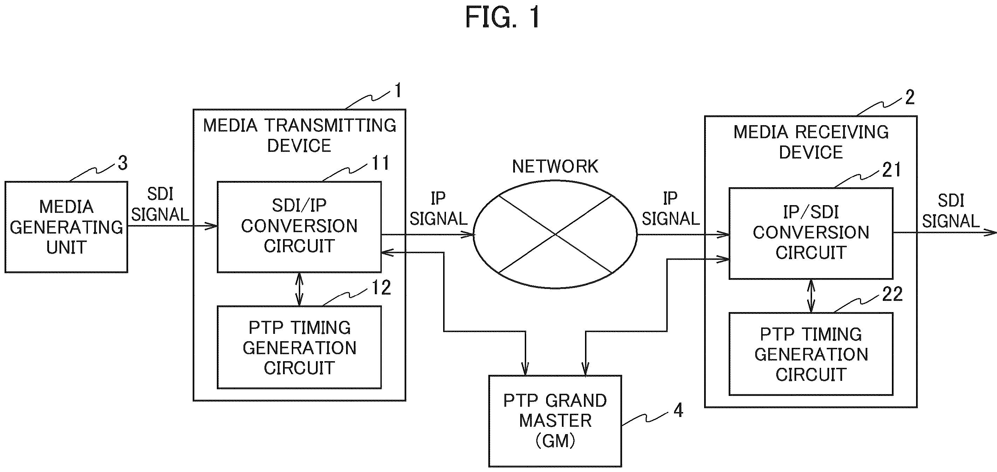

FIG. 1 is a diagram illustrating a media transmission system according to the present disclosure. A media generating unit 3 is composed of a camera or the like, and outputs an SDI signal (media signal or video signal) which is a digital signal with video, audio, and auxiliary data superimposed. The media transmission system is a system that transmits the SDI signal over a network. When the media transmission system transmits the SDI signal over a network, it generally converts the SDI signal into an IP signal (video packet or media packet) in accordance with the SMPTE ST2110 or SMPTE ST2022-8 standard. In this specification, "media" and "media signal" indicate video, audio, auxiliary data (ancillary data), and signals thereof. The "media signal" is also referred to as "video signal".

The media transmission system includes a media transmitting device 1 and a media receiving device 2. The media transmitting device 1 includes an SDI/IP conversion circuit 11 for converting an SDI signal into an IP signal, and a PTP timing generation circuit 12. The media receiving device 2 includes an IP/SDI conversion circuit 21 for converting an IP signal into an SDI signal, and a PTP timing generation circuit 22.

A PTP grand master 4 (hereinafter, referred to as "GM") is a device that distributes high-precision time in accordance with Precision Time Protocol (PTP). PTP is a protocol defined by IEEE1588 for synchronizing clocks and times with high precision. The GM4 periodically transmits and receives time information packets to and from the PTP timing generation circuits 12 and 22 in the media transmitting device 1 and the media receiving device 2. Thus, a clock or time information of the PTP timing generation circuits 12 and 22 can be synchronized with a clock or time information of the GM4. At this point, by synchronizing the clock of the GM4 with a GNSS (Satellite Positioning System) signal, the time information of the GM4 and the time information of the PTP timing generation circuits 12 and 22 can be synchronized with the absolute time of International Atomic Time (IAT) or Universal Time Coordinated (UTC) with an error of nanosecond level.

The SMPTE ST2059-1 and ST2059-2 standards provide that the time of 0:00:00 AM (SMPTE_EPOCH) on January 1, 1970 should be used as a reference for the transmission of video signals. In particular, these standards define an alignment point indicated by the time based on SMPTE_EPOCH as a video frame synchronization signal of an SDI signal. That is, when generating or reproducing a video signal, each frame of the SDI signal is commonly generated and output at the timing of the alignment point. The alignment point is calculated from a high-precision clock synchronized with the clock of the GM4.

The clocks of the PTP timing generation circuits 12 and 22 are used as system clocks for the processing operations of the circuits of the media transmitting device 1 and the media receiving device 2. In this specification, the system clocks from the PTP timing generation circuits 12 and 22 are referred to as "PTP clock", and the time information is referred to as "PTP time based on SMPTE_EPOCH" or simply "PTP time".

The media transmitting device 1 converts an SDI signal (digital signal) on which video, audio, and auxiliary data from the media generating unit 3 is superimposed into a media packet (IP signal) in accordance with the SMPTE ST2110 or SMPTE ST2022-8 standard in the SDI/IP conversion circuit 11, and transmits the media packet as an Ethernet frame to a network. At this point, the media packet is not stamped with the time at which the frame of the SDI signal is input to the media transmitting device 1, but with the timing of the alignment point based on the SMPTE_EPOCH corresponding to the time when each frame is generated as a time stamp. The SMPTE ST2110 provides a method of converting video, audio, and auxiliary data into IP packets. The SMPTE ST2022-8 provides a method of integrating SDI signals on which video, audio and auxiliary data is superimposed into IP packets as they are.

The media receiving device 2 receives media packets (IP signals) in accordance with the SMPTE ST2110 or SMPTE ST2022-8 standard as Ethernet frames in the IP/SDI conversion circuit 21, converts them into SDI signals (digital signals) on which video, audio and auxiliary data are superimposed, and outputs them. At this point, each frame of the SDI signal is generally output after waiting for the timing of the alignment point based on SMPTE_EPOCH (timing in frames).

However, in this embodiment, each frame of the SDI signal is immediately output at a timing obtained by adding a predetermined offset to the alignment point corresponding to the time stamp applied to each frame. That is, in this embodiment, each frame is output without waiting for the timing of the nearest (next) alignment point. The predetermined offset includes processing time by the media transmitting device 1 and the media receiving device 2, and transmission delay time between the devices 1 and 2. This makes it possible to output a frame with a lower delay than in a conventional method that waits for the timing of the next alignment point.

In addition, by outputting frames at timing based on the alignment point corresponding to the time stamp applied to each frame, a frame synchronous output with high precision can be achieved in multilink transmission. In the multilink transmission, when a signal whose time stamp values do not match is transmitted to a receiving side, there is a possibility that the frame boundary of an SDI signal to be output is shifted on a receiving side in the multilink as well, and this may disturb the screen at the time of synthesis. In this embodiment, high-quality video and audio can be restored without causing any disturbance in the screen on the receiving side.

### First Embodiment

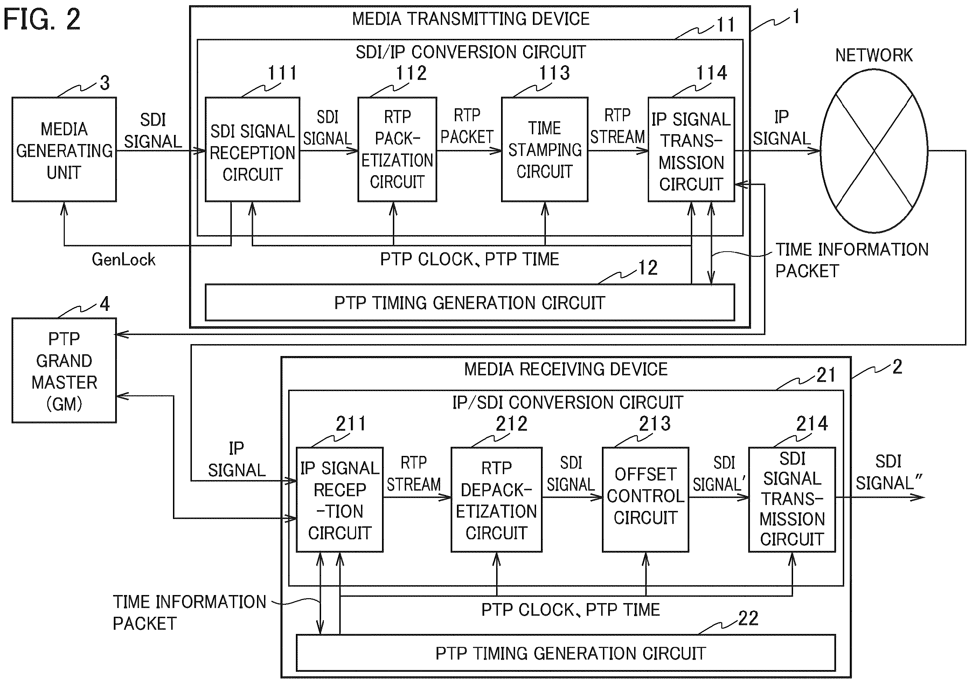

FIG. 2 is a diagram illustraing the configuration of a media transmission system according to a first embodiment of the present disclosure.

The SDI/IP conversion circuit 11 of the media transmitting device 1 includes an SDI signal reception circuit 111, an RTP packetization circuit 112, a time stamping circuit 113, and an IP signal transmission circuit 114. The IP/SDI conversion circuit 21 of the media receiving device 2 includes an IP signal reception circuit 211, an RTP depacketization circuit 212, an offset control circuit 213, and an SDI signal transmission circuit 214.

The SDI signal reception circuit 111 receives the PTP clock from the PTP timing generation circuit 12, generates a video synchronization signal (GenLock) based on the SMPTE_EPOCH provided in SMPTE ST2059-1 and 2059-2 based on the PTP clock, and supplies the signal to the media generating unit 3. The media generating unit 3 supplies the SDI signal generated based on the GenLock to the SDI signal reception circuit 111. At this point, each frame of the SDI signal is generated in association with the timing of the alignment point based on the SMPTE_EPOCH.

The SDI signal reception circuit 111 receives the video signal generated with each frame corresponding to the timing of the alignment point based on the SMPTE_EPOCH. Specifically, the SDI signal reception circuit 111 receives the SDI signal in synchronization with the internal PTP clock, and transmits the received SDI signal to the RTP packetization circuit 112.

The RTP packetization circuit 112 converts the SDI signal into a plurality of packets in frames. Specifically, the RTP packetization circuit 112 converts the SDI signal supplied from the SDI signal reception circuit 111 into a media packet (RTP packet) provided in SMPTE ST2110-20/30/40 or ST2022-8. Here, the RTP packetization circuit 112 divides the SDI signal as media payload for each predetermined byte, adds a payload header and an RTP header, and encapsulates as RTP packets.

RTP refers to Real-time Transport Protocol provided in IETF RFC3550. RTP is a data communication protocol for dividing a data stream such as video and audio into a series of RTP packets to transfer in real-time. The series of RTP packets constitute a data stream. Hereinafter, this data stream is referred to as an RTP stream. The RTP stream constitutes a frame for a plurality of RTP packets. This frame is the same as the frame defined in the SDI signal. The RTP stream is packetized as IP to be an IP signal in the IP signal transmission circuit 114 of a subsequent stage, and is transmitted to the destination (media receiving device 2) over a network such as the Internet.

The time stamping circuit 113 applies a time stamp corresponding to the timing of the alignment point at the time of generation set to the corresponding frame to each RTP packet. Here, the time stamping circuit 113 stamps a time stamp on the RTP packet sent from the RTP packetization circuit 112. The time stamp is set in the RTP header. More specifically, a time stamp value indicating the timing of the alignment point when the frame of the SDI signal is generated is applied to a series of media packets (RTP packets) generated from the SDI signal. In this embodiment, the time stamp may be expressed as time or another index value indicating time (for example, a clock count value). The time stamp and the time stamp value mean the same. Stamping, appliying, and setting of the time stamp mean the same.

The IP signal transmission circuit 114 transmits each RTP packet to which the time stamp is applied as an IP signal. Specifically, the IP signal transmission circuit 114 puts an IP signal obtained by converting the RTP stream to which a time stamp is applied into an IP packet on an Ethernet frame and outputs it to the network at a timing in accordance with SMPTE ST2110-10. The IP signal transmission circuit 114 also functions as a transmitter/receiver for exchanging time information packets between the GM4 and the PTP timing generation circuit 12.

As the network, for example, the Internet can be used, but any network that can transmit IP signals can be used.

Next, the operation of the time stamping circuit 113 of the media transmitting device will be described.

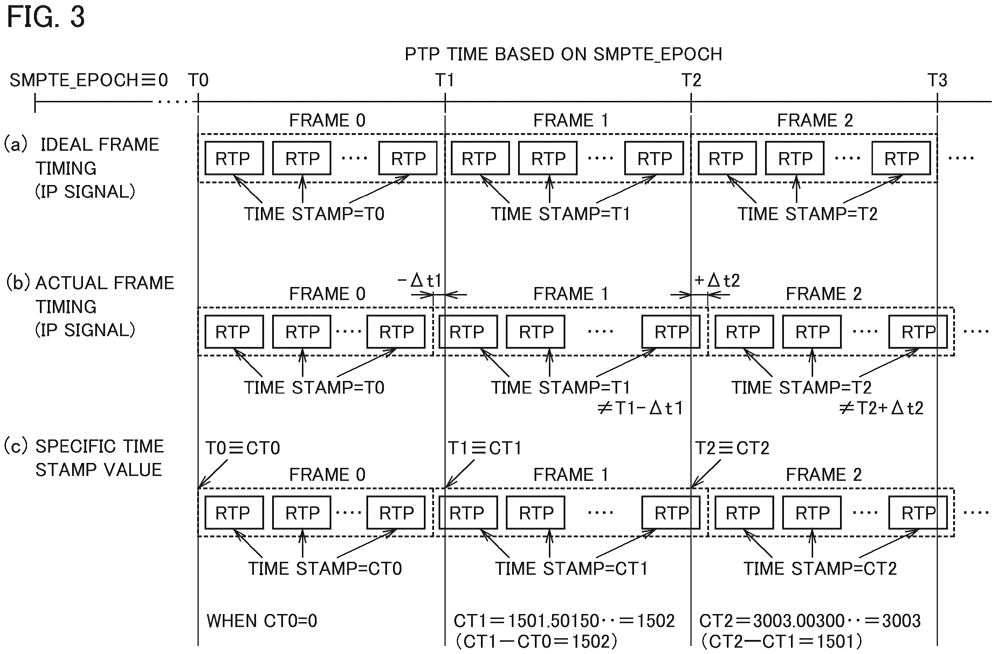

FIG. 3 is a diagram illustrating a time stamp applying method according to this embodiment. A horizontal axis in FIG. 3 indicates the time elapsed from SMPTE_EPOCH, that is, the PTP time. Ideal frame timing of an output (IP signal) of the media transmitting device 1 is shown in (a). It is assumed that there is no delay or fluctuation in the SDI signal from the media generating unit 3 to the media transmitting device 1, and that processing time in the media transmitting device 1 is ignored. Therefore, the frame timing of the SDI signal received from the media generating unit 3 is output as the frame timing of the IP signal as it is.

Regarding the output of the IP signal, RTP packets of frames 0, 1, 2 ... are output at times T0, T1, T2 .... Timing of time T0, T1, T2 ... are the timing of the alignment point based on SMPTE_EPOCH, and each frame of the SDI signal is continuously transmitted from the media generating unit 3 at the timing. The alignment point based on SMPTE_EPOCH is provided as a GenLock from the media transmitting device 1 to the media generating unit 3. Therefore, it is known to the media transmitting device 1 at which timing signals are transmitted from the media generating unit 3.

At this point, a time stamp corresponding to time T0 is stamped on all RTP packets of frame 0. Similarly, a time stamp corresponding to time T1 is stamped on all RTP packets of frame 1, and a time stamp corresponding to time T2 is stamped on all RTP packets of frame 2. The time between time T1 and time T0 and the time between time T2 and time T1 are frame periods. The time stamp value actually set is a value obtained by converting the time into a count value (integer) of a clock. When the count value of the frame period has a decimal point, the period represented by the count value is not necessarily the same for each frame.

The SDI signal input from the media generating unit 3 may have temporal fluctuations due to jitter or the like.

An actual frame timing of an output (IP signal) of the media transmitting device 1 is shown in (b). Here, it is assumed that the SDI signal has temporal fluctuations. In (b), after receiving frame 0 at time T0, the SDI signal reception circuit 111 receives frame 1 by Δt1 earlier than T1, and receives frame 2 by Δt2 later than time T2. In practice, fluctuations may occur with respect to the time T0 receiving frame 0, but for convenience of explanation, it is assumed here that there is no fluctuation at the time T0 receiving frame 0.

In the above example, the time stamps of the RTP packets of frames 0, 1, and 2 are in general stamped with PTP time captured by the SDI signal reception circuit 111 when receiving each frame, that is, values corresponding to T0, T1 - Δt1, and T2+Δt2, respectively.

However, in this embodiment, the time stamp using the time at which the media transmitting device 1 captures each frame of the SDI signal is not stamped. In this embodiment, even if there are temporal fluctuation in a received SDI signal, an ideal time stamp value as shown in (a) is applied to each frame. Specifically, a time stamp value corresponding to time T0 is applied to frame 0, a time stamp value corresponding to time T1 is applied to frame 1, and a time stamp value corresponding to time T2 is applied to frame 2. The subsequent frames are stamped in the same manner.

A specific example thereof will be described with reference to (c).

A specific time stamp value in the actual frame timing of (b) is shown in (c). The PTP time based on SMPTE_EPOCH is expressed in 80 bits in the standard, and is composed of a 48 bit seconds field (secondsField) and a 32 bit nanosecond field (nanosecondsField) representing a time in nanoseconds. The time stamping circuit 113 converts the PTP time information into a 32 bit counter value of a 90 kHz clock, and stamps the counter value as a time stamp. The time stamp value is specified to be an integer when the time information of the PTP is converted into a time stamp value, so that a decimal fraction of the count value is generally rounded off to the nearest whole number.

When frame 0 of the SDI signal is input, a 90 kHz count value CT0 corresponding to time T0 by the alignment point associated with frame 0 is stamped as a time stamp on all RTP packets of frame 0. When frame 1 is input subsequently, a 90 kHz count value CT1 corresponding to time T1 by the alignment point associated with frame 1 is stamped as a time stamp on all RTP packets of frame 1. When frame 2 is input further, a 90 kHz count value CT2 corresponding to time T2 by the alignment point associated with frame 2 is stamped as a time stamp on all RTP packets of frame 2. The same applies thereafter.

For example, the frame period is 1/59.94 Hz when the frame rate is 59.94 Hz, so that the count number of a 90 kHz clock is counted as 1/59.94×90,000=1501.50150150150.... That is, when the count value corresponding to time T0 of frame 0 is CT0, the count values of subsequent frames are CT1=CT0+1501.50150150150 ... ×1, CT2=CT0+1501.50150150150 ... ×2 .... When CT0=0 (which does not actually exist), then CT1=1501.50150150150..., CT2=3003.003003003... are obtained. When the decimal point is rounded off to an integer, CT0=0, CT1=1502, CT2=3003 are obtained. In other words, these values are stamped as time stamp values. Then, CT1-CT0=1502, CT2-CT1=1501 are obtained. In the above example, the periods of 1502 and 1501 are alternately repeated for a while as the frame advances. However, there is a case in which the period of 1502 successively appears when the fraction (0. 00150150150...) to the second decimal place exceeds 1 due to accumulation. By setting such a time stamp, the frame rate of 59.94 Hz can be maintained.

The foregoing is an actual time stamp value at an ideal frame timing. The time stamp value CT0 at frame 0 is also set to a value obtained by rounding off a value obtained by counting T0 at a 90 kHz clock. For the boundary of the frame, Marker bit (M): 1 bit is set in the header of the RTP packet, and it is set to 1 at the end of the frame. Therefore, the time stamping circuit 113 can determine the frame boundary using the marker bit (M).

As described above, the time stamping circuit 113 sets the ideal frame timing by the alignment point based on the SMPTE_EPOCH when the SDI signal is generated as a time stamp. Each RTP packet with such a time stamp set becomes an RTP stream, and is output to the network as an IP signal in the IP signal transmission circuit 114. That is, in this embodiment, the PTP time information captured when each frame is received is not used as a time stamp.

Referring back to FIG. 2, the IP signal sent from the media transmitting device 1 is received by the media receiving device 2 via the network.

The IP signal received by the media receiving device 2 is supplied to the IP signal reception circuit 211. The IP signal reception circuit 211 receives an IP signal (IP packet). Specifically, the IP signal reception circuit 211 extracts an RTP stream configured by an RTP packet from the IP signal carried on the Ethernet frame and transmits it to the RTP depacketization circuit 212. The IP signal reception circuit 211 also functions as a transmitter/receiver for exchanging time information packets between the GM4 and the PTP timing generation circuit 22, similar to the IP signal transmission circuit 114 of the media transmitting device 1.

The RTP depacketization circuit 212 reproduces a frame of an SDI signal from the received IP signal. Specifically, the RTP depacketization circuit 212 generates a bit string (frame data) that configures an SDI signal from the RTP stream supplied from the IP signal reception circuit 211 in accordance with the provisions of SMPTE ST2110-20/30/40 or ST2022-8. This SDI signal is sent to the offset control circuit 213.

The offset control circuit 213 outputs the frame of the reproduced SDI signal at an output timing obtained by adding a predetermined offset to the alignment point of the time stamp given to the corresponding RTP packet. That is, the offset control circuit 213 transmits the SDI signal to the SDI signal transmission circuit 214 at a timing obtained by adding an offset to the time of the time stamp value stamped by the media transmitting device 1. A time equal to or greater than the total delay time obtained by adding the transmission delay time and SDI/IP conversion processing time of the transmitting and receiving sides is used as the offset.

The SDI signal transmission circuit 214 outputs the frame output from the offset control circuit 213 as an SDI signal. That is, the SDI signal transmission circuit 214 immediately outputs the SDI signal output from the offset control circuit 213.

An operation of the offset control circuit 213 will be described below.

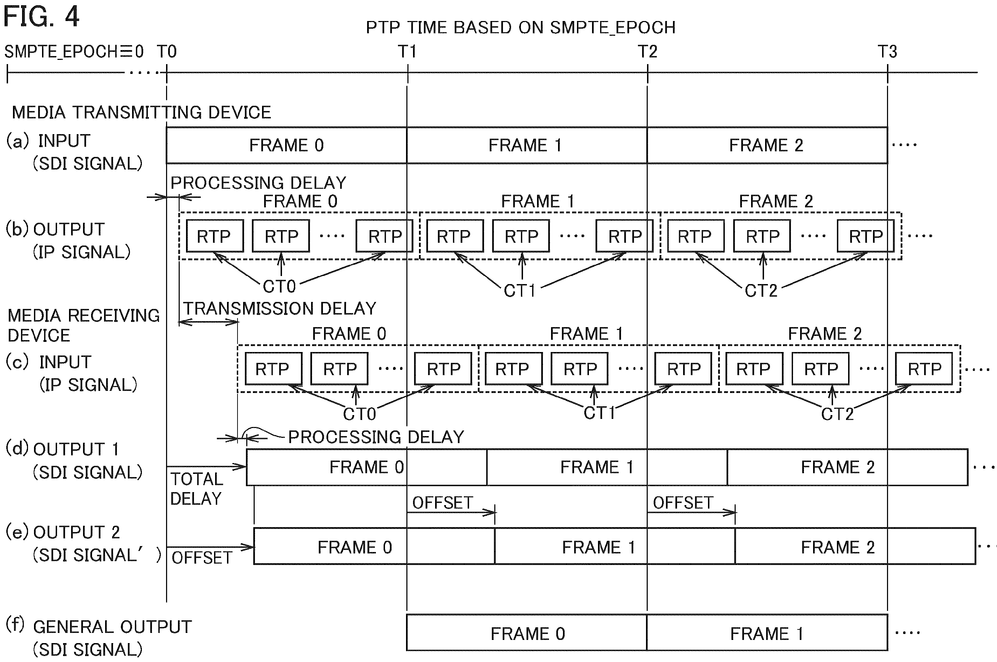

FIG. 4 is a diagram illustrating an output timing of a media receiving device 2 according to this embodiment. A horizontal axis represents PTP time based on SMPTE_EPOCH.

An image of the SDI signal input to the SDI signal reception circuit 111 of the media transmitting device 1 is shown in (a). Frames 0, 1, 2 ... of the SDI signal are input to the SDI signal reception circuit 111 at time T0, T1, T2..., which are alignment point timings. As described with reference to FIG. 3, frame timings T0, T1, T2 of the SDI signal transmitted from the media generating unit 3 are known to the media transmitting device 1. The temporal fluctuation of the SDI signal described with reference to FIG. 3 is not shown here for the sake of explanation.

An image of the IP signal output from the IP signal transmission circuit 114 of the media transmitting device 1 is shown in (b). The SDI signal received by the SDI signal reception circuit 111 is converted into an RTP stream and then further output as an IP signal. The time stamp values CT0, CT1, CT2 ... described with reference to FIG. 3 are applied to each RTP packet in the frame. The IP signal is delayed by the processing delay of converting the SDI signal into the IP signal.

An image of the IP signal input to the IP signal reception circuit 211 of the media receiving device 2 is shown in (c). The IP signal received by the media receiving device 2 is delayed by a transmission delay due to network transmission.

An image of the SDI signal output from the RTP depacketization circuit 212 of the media receiving device 2 is shown in (d). The IP signal received by the media receiving device 2 is assembled into an SDI signal in the RTP depacketization circuit 212. At this point, a delay is added by a processing delay for converting the IP signal into the SDI signal.

An image of an SDI signal' output from the offset control circuit 213 of the media receiving device 2 is shown in (e). The offset control circuit 213 calculates a total delay time by adding the processing time of the media transmitting device 1, the transmission delay time, and the processing time of the media receiving device 2, and sets it as an offset. The transmission delay time is measured in advance by transmitting and receiving packets for measurement between the media transmitting device 1 and the media receiving device 2. The actual transmission delay time may vary slightly with respect to the transmission delay time measured in advance. Therefore, the total delay time needs to include a variation of the transmission delay time. The variation is calculated by, for example, 3σ (standard deviation) when the average value of the transmission delay time is obtained as the variation so that the variation can be output at the timing specified by the offset in almost all cases in consideration of the dispersion of the transmission delay. The offset control circuit 213 may calculate an offset value that includes the additional time of the variation in the total delay time.

The offset control circuit 213 outputs the SDI signal by controlling the output timing of frame 0 to become time T0+offset (specified time). Specifically, the offset control circuit 213 outputs the SDI signal after making a buffer circuit (not shown) wait until the output timing is reached. The time T0, T1, T2 ... can be easily calculated from the time stamp values of the frames and the alignment point. The time stamp values of the frames are integer values as described with reference to FIG. 3, so that the alignment point based on the accurate PTP time cannot be calculated directly from the values. However, the closest alignment point can be easily obtained since the alignment point is a discrete value.

In principle, the SDI signal transmission circuit 214 of the media receiving device 2 immediately outputs the SDI signal that is output from the offset control circuit 213. Therefore, the SDI signal that is output from the media receiving device 2 is output at a timing delayed by an offset from the time T0.

As a comparative example, an image of the SDI signal that is output from the media receiving device in a general transmission system based on the provisions of SMPTE ST2110 or ST2022-8 is shown in (f). As shown in (f), in a general media receiving device, the SDI signal is output at each time when the SDI signal is input to the media transmitting device. In the case of (f), frames 0, 1, 2 ... of the SDI signal are output at each time T0, T1, T2 ... when the SDI signal is input to the media transmitting device. That is, in a general media receiving device, frame 0 is output after waiting until time T1.

In contrast, in this embodiment, frame 0 is output at time at which an offset is added to time T0 without waiting until time T1. Therefore, in this embodiment, it is possible to reduce the output delay of the media receiving device 2 by reducing the waiting time.

A specific example will be described below. Generally, the conversion processing time between an SDI signal including video, audio, and auxiliary data and an IP signal is within 1 ms in total on the transmitting and receiving sides. Assuming an optical fiber transmission of 80 km as a network, the transmission delay of the optical fiber is 0.4 ms, when the speed of light in the optical fiber is 200,000 km/s. Therefore, the total delay time is 1.4 ms. When additional time assuming the variation is 0.1 ms (about 25% of the transmission delay), the offset can be set to 1.5 ms.

On the other hand, in the case of a general media receiving device, 1 period is about 16.68 ms when the frame rate is 59.94 Hz, so that the media is output after waiting for a maximum of 16.68 ms. Therefore, in the media receiving device 2 according to this embodiment, the media can be output almost immediately after 1.5 ms of the offset when the spare time is not taken into consideration. Therefore, in this embodiment, the output delay can be greatly reduced.

The media transmission system according to the embodiment described above includes the media transmitting device 1 and the media receiving device 2. The media transmitting device 1 includes the video signal reception circuit 111 for receiving a video signal generated with each frame corresponding to the timing of an alignment point based on SMPTE_EPOCH; the packetization circuit 112 for converting the video signal into a plurality of packets in frames; a time stamping circuit 113 for applying a time stamp corresponding to the timing of the alignment point set to the corresponding frame at the time of generation to each packet; and an IP signal transmission circuit 114 for transmitting each packet to which the time stamp is applied as an IP signal. The media receiving device 2 includes an IP signal reception circuit 211 for receiving the packets; a depacketization circuit 212 for reproducing a frame of the video signal from the received packets; an offset control circuit 213 for outputting the reproduced frame at an output timing obtained by adding a predetermined offset to an alignment point of the time stamp applied to the corresponding packet; and a video signal transmission circuit 214 for outputting the frame output from the offset control circuit 213 as the video signal.

As described above, in the media transmission device 1 according to this embodiment, the timing of the alignment point based on SMPTE_EPOCH associated with the time at which each frame of the video signal (SDI signal) is generated, is stamped as a time stamp. Thus, even if there are temporal fluctuations in the video signal input to each circuit of the media transmitting device 1, the time indicating the timing of the ideal frame can always be set as a time stamp. Therefore, in this embodiment, it is possible to avoid deterioration in video quality due to phase fluctuations in the video signal.

Furthermore, in the media receiving device 2 according to the embodiment, an output is made at a timing obtained by adding an offset in consideration of the processing time and the transmission delay time to the alignment point corresponding to the time stamp applied to each frame. This makes it possible to output at a lower delay than in a conventional method in which an output made after waiting for the timing of the next alignment point.

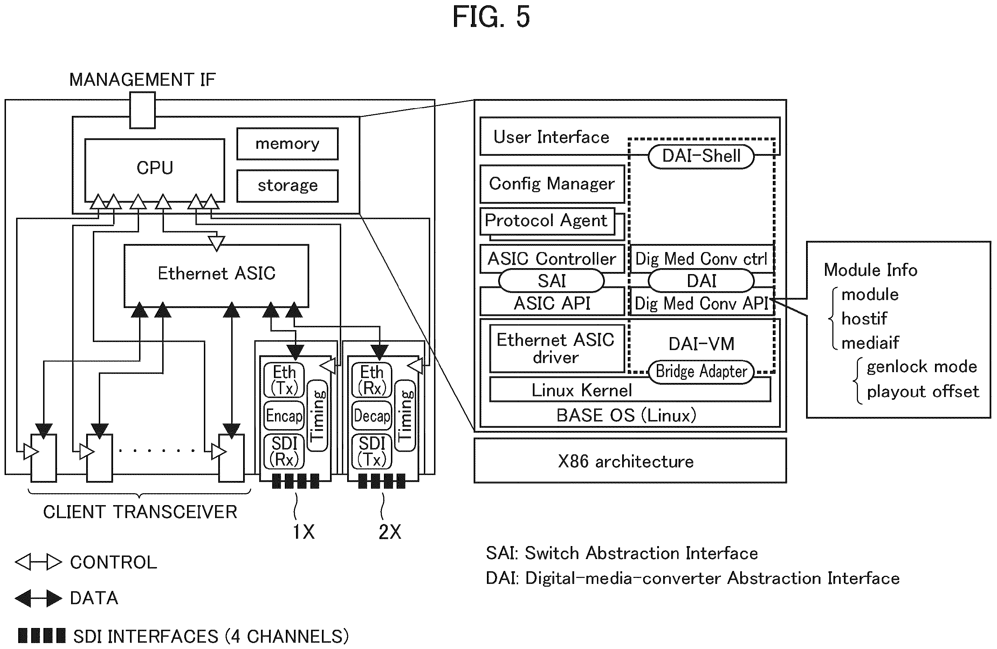

FIG. 5 is a diagram showing implementation images of the media transmitting device 1 and the media receiving device 2 according to this embodiment.

As the media transmitting device 1 and the media receiving device 2, for example, a white box switch as shown in FIG. 5 can be used. The white box switch is a network device in which an Ethernet ASIC, a client transceiver, and the like are combined with an x86 server architecture such as a CPU, memory, and storage. In the white box switch, hardware and software are separated, and the user can select and install a network OS/software having necessary functions. Some white box switches, such as Edgecore Networks' Cassini and Wistron Corporation's Galileo1, have expansion slots in which a transponder function can be added as hardware in the form of a plug-in unit.

In FIG. 5, a transmitting module 1x having the function of a media transmitting device 1 and a receiving module 2x having the function of a media receiving device 2 are installed via an interface of the Ethernet. When unidirectional communication is configured, either module 1x or 2x is installed, and when bidirectional communication is configured, both modules 1x and 2x are installed.

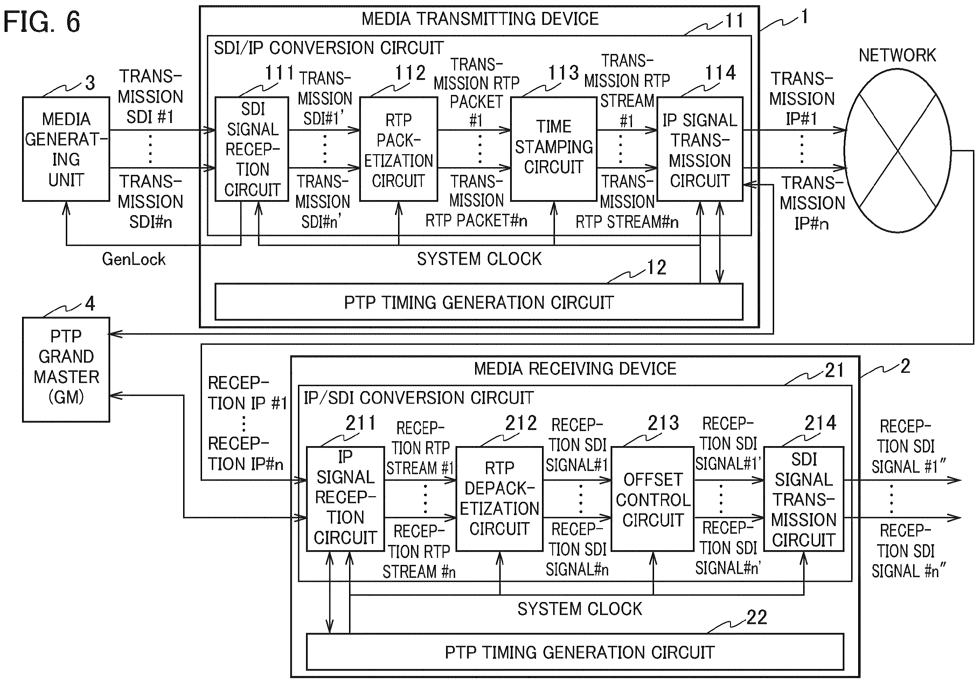

A transmitting module 1x and a receiving module 2x illustrate in FIG. 5 have four channels of SDI signal input interfaces and output interfaces. In the example shown in FIG. 2, only one channel is used. In the example shown in FIG. 6, two channels are used. It is also possible to transmit four channels of signals simultaneously. Furthermore, it is also possible to increase the number of channels of signals to more than four. In this specification, one channel is defined as a path that transmits or receives one flow of signals regardless of hardware. One channel or a plurality of channels may be configured by a set of transmitting device and receiving device.

In FIG. 5, as an implementation example of the media transmitting device 1 and the media receiving device 2, a white box in which the desired function is realized by attaching a program or an interface from the outside is shown. However, the media transmitting device 1 and the media receiving device 2 may also be realized using a dedicated device.

The main functions shown in Fig. 5 are described below.

- SAI: an open Ethernet ASIC control API. It is used as Hardware Abstraction Layer (HAL) which is an abstraction of Ethernet ASICs of multiple vendors in a network OS. (See https://github.com/opencomputeproject/SAI).

- DAI: Digital-media Abstraction Interface, HAL which is an abstraction of digital media converter such as Encapsulator/De-encapsulator, Encoder/Decoder, similar to SAI for Ethernet ASICs. Each of the transmitting module 1x of the media transmitting device 1 and the receiving module 2x of the media receiving device 2 has a network interface object hostif which is connected to a switch and a media interface object mediaif which is connected to digital media. In mediaif, there are attributes such as genlock mode and playout offset.

- DAI-SH: A dedicated CLI for setting the above attributes.

- Bridge Adapter: An IF adapter that bridges the Kernel-space of the network OS of the white box switch and DAI-VM. Using this, an i2c command for controlling the transmitting module 1x and receiving module 2x from the Linux kernel can be sent to the kernel via a control plane as a message using a socket, and a DAI command can be sent via a data plane as a message using a socket.

- DAI-VM: provides a KVM environment for controlling the Digital Media Converter separately from the network OS.

When the media transmitting device 1 and the media receiving device 2 of the first embodiment shown in FIG. 2 are implemented using the white box switch shown in FIG. 5, the white box switch on the transmitting side connects the media generating unit 3 (such as camera) to one channel of the transmitting module 1x, and the interface of the client transceiver is connected to the network. In the white box switch on the receiving side, the interface of the client transceiver is connected to the network, and the reproduced SDI signal is obtained from one channel of the receiving module 2x.

### Second Embodiment

The second embodiment is an embodiment of multilink transmission. A high-speed communication means is required for transmission of uncompressed signals of ultra-high-definition video such as 4K and 8K, and this is also standardized by SMPTE. For example, HD (high-definition) video is not divided into multiple signals for transmission, but 4K and 8K may be divided into multiple signals for transmission as multilink when a high-speed transmission line cannot be prepared. When 4K video is transmitted by one communication cable (single link), a cable (12G-SDI) capable of passing 12Gbps is required, but when it is transmitted by four cables (multilink), it is sufficient to prepare four cables capable of passing 3Gbps (4 × 3G-SDI). Similarly, when 8K video is transmitted by one communication cable (single link), a cable (48G-SDI) capable of passing 48Gbps is required, but when it is transmitted by four cables (multilink), it is sufficient to prepare four cables capable of passing 12Gbps (4 × 12G-SDI). In the communication field, transmission at the level of 100Gbps per channel has been put to practical use, but multilink transmission is essential for 8K video transmission, since 48G-SDI is a very difficult technology that has not yet been standardized.

What is important in such multilink transmission is how precisely a screen (video frame) decomposed into multiple signals on the transmitting side can be restored on the receiving side. In the case of multilink, there is a possibility that a screen is disturbed during synthesis if precise synchronization of frames is not obtained in the multilink on the receiving side.

In addition, the counter value may not always be an integer due to the relationship between a clock signal and a frame period, and in such a case, the counter value is generally rounded off to an integer and used as a time stamp. In such a case, even signals with the same period may not always have the same time stamp value due to phase fluctuation. When the device in Patent Literature 1 is applied to multilink transmission, there is a possibility that time stamp values do not always match between signals to be transmitted through multilink transmission. Phase fluctuation due to jitter or the like may occur not only between the camera and the transmitter (transmitting device), but also in some cases due to a difference between the timing of data received when the transmitter receives the SDI signal and the timing of the clock in the transmitter. When a signal of which time stamp values do not match in the multilink is transmitted to the receiving side, there is a possibility that the frame boundary of the SDI signal to be output is also shifted in the multilink on the receiving side, and this may disturb the screen during synthesis.

In Patent Literature 2, a common PTS offset is set in order to absorb a difference in delay among a plurality of paths, but it is set with PTS as a reference. The PTS is a time at which the video signal or the like is to be presented on the receiving side. Therefore, when calculating the offset for absorbing the delay difference of the plurality of the paths, the calculation is complicated because the reference is the scheduled time. Further, in Patent Literature 2, although video signals are reproduced synchronously at the same timing in a plurality of receiving terminals, precise synchronization including the period and phase of frames in the video signals is not considered, and there is a risk of generating screen disturbance during synthesis. Moreover, the time synchronization in Patent Literature 2 is for Network Time Protocol (NTP) with synchronization accuracy in the order of microseconds, and the synchronization accuracy is worse than synchronization for Precision Time Protocol (PTP) with synchronization accuracy in the order of nanoseconds like the SMPTE standard, and degradation of video quality is unavoidable. It should be noted that Patent Literature 2 is for IP transmission of encoded signals, and it is not for IP transmission of uncompressed signals before encoding.

In this embodiment, a frame synchronization output with high-precision is achieved even in the case of multilink transmission by outputting frames at the timing based on the alignment point corresponding to the time stamp applied to each frame.

IP transmission standards for media including 4K and 8K video are provided in the SMPTE ST2110 Suite. The standards for 4K multilink using SDI are provided in SMPTE ST425-5 as quad link, and the standards for 8K multilink are provided in SMPTE ST2082-12 as quad link.

FIG. 6 is a diagram illustrating a configuration of a media transmission system according to a second embodiment of the present disclosure.

In the implementation configuration shown in FIG. 5, the media transmitting device 1 and the media receiving device 2 according to this embodiment use a plurality of channels. In the example shown in FIG. 5, the transmitting module 1x having the function of the media transmitting device 1 and the receiving module 2x having the function of the media receiving device 2 can each be implemented up to four channels. However, if the white box switch shown in FIG. 5 only uses the function of one direction of transmitting or receiving, up to eight channels can be implemented by mounting two transmitting modules 1x or two receiving modules 2x. This method of transmitting signals of a plurality of flows through a plurality of channels is called multilink transmission.

For example, when 4K/59.94p video is transmitted using 3G-SDI, Quad 3G-SDI (3Gbps transmission × 4 channels) is required. When 8K/59.94p video is transmitted using 12G-SDI, Quad 12G-SDI (12Gbps transmission × 4 channels) is also required. The implementation configuration shown in Fig. 5 can be realized by mounting SDI interfaces of four channels on the transmitting side and SDI interfaces of four channels on the receiving side.

The operation of the individual circuits of the media transmission system according to this embodiment illustrated in FIG. 6 is basically the same as that of the individual circuits of the media transmission system of the first embodiment illustrated in FIG. 2. However, in the media transmission system according to this embodiment shown in FIG. 6, the individual circuits perform the operations of n channels (multiple channels) in parallel (simultaneously). In this specification, the channel is represented by "#", and the signals of the nth channel are distinguished by "#n". The number of channels does not correspond to the number of circuits. In this embodiment, one circuit processes signals of multiple channels, but in the third embodiment described below, one circuit processes one channel.

The media transmitting device 1 and the media receiving device 2 includes one PTP timing generation circuit 12 and 22, respectively. The media transmission system uses one GM4. The functions of the PTP timing generation circuits 12 and 22 are the same as those of the first embodiment, and the PTP clock and PTP time information synchronized with the GM4 are supplied to each circuit for each device.

The media generating unit 3 receives GenLock, which is a video synchronization signal, from the SDI signal reception circuit 111, and generates an SDI signal based on GenLock. Each frame of the SDI signal is generated at the timing of the alignment point. The media generating unit 3 divides each frame of the generated SDI signal into n flows in frames and supplies them to the media transmitting device 1. In the illustrated example, the SDI signal is divided into transmission SDIs #1 to #n in frames and supplied to the media transmitting device 1.

The SDI signal reception circuit 111 of the media transmitting device 1 receives transmission SDIs #1 to #n and transmits transmission SDIs #1' to #n' to the RTP packetization circuit 112. The RTP packetization circuit 112 transmits transmission RTP packets #1 to #n obtained by RTP packetizing transmission SDIs #1' to #n' to the time stamping circuit 113.

The time stamping circuit 113 outputs transmission RTP streams #1 to #n obtained by adding the time stamps described with reference to FIG. 3 to each of the transmission RTP packets #1 to #n in frames. The IP signal transmission circuit 114 transmits transmission IPs #1 to #n obtained by converting the transmission RTP streams #1 to #n into IP signals to the network. In the implementation configuration shown in FIG. 5, the transmission IP signals are sent to the network via the Ethernet ASIC and the client transceiver.

The IP signal reception circuit 211 of the media receiving device 2 receives the receition IPs #1 to #n through the network, and transmits reception RTP streams #1 to #n obtained by extracting the RTP streams composed of RTP packets to the RTP depacketization circuit 212. The RTP depacketization circuit 212 transmits the reception SDIs #1 to #n obtained by RTP-depacketizing of the reception RTP streams #1 to #n to the offset control circuit 213. The offset control circuit 213 outputs the reception SDIs #1' to #n' obtained by setting the offsets described in FIG. 4 to the SDI signal transmission circuit 214 at a specified time. The SDI signal transmission circuit 214 immediately outputs the reception SDIs #1' to #n' as the reception SDIs #1" to #n".

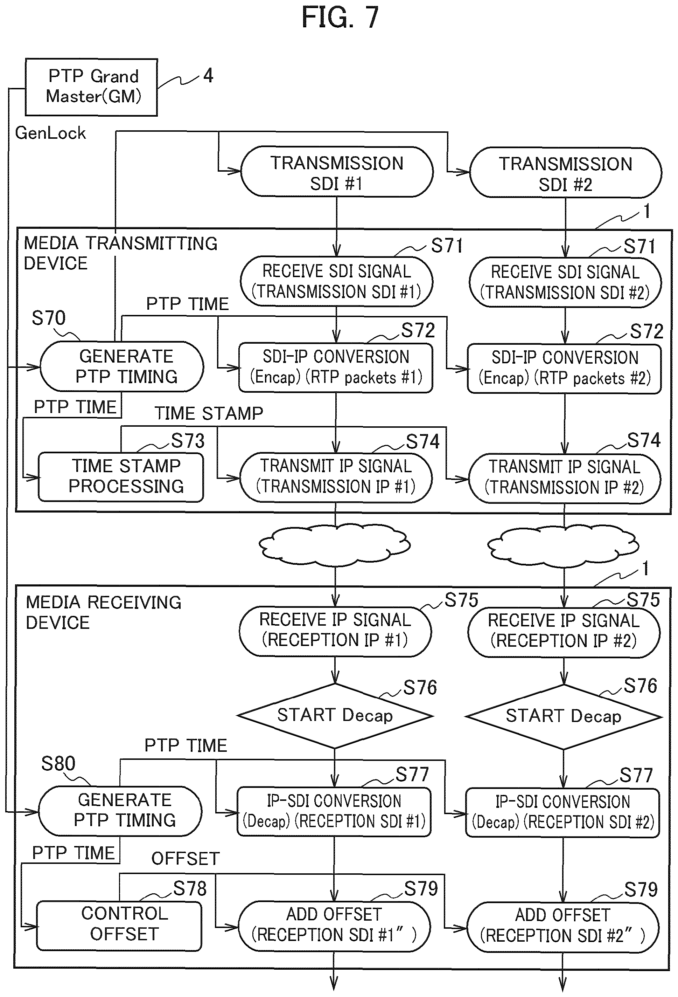

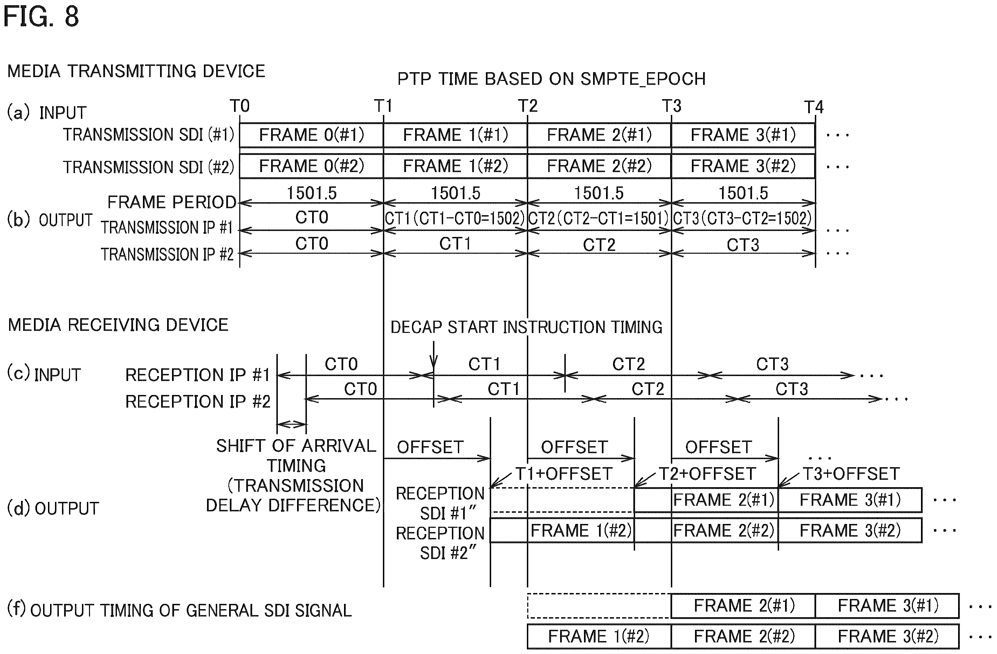

FIG. 7 is a processing flowchart of the media transmission system according to this embodiment. FIG. 8 is an operation time chart of the media transmission system according to this embodiment. FIGS. 7 and 8 illustrates a case of two channels, that is, n=2, in the configuration diagram of FIG. 6.

In FIG. 8, an input (transmission SDI#1, transmission SDI #2) of the SDI signal reception circuit 111 of the media transmitting device 1 is shown in (a), an output (transmission IP #1, transmission IP #2) of the IP signal transmission circuit 114 of the media transmitting device 1 is shown in (b), an input (reception IP #1, reception IP #2) of the IP signal reception circuit 211 of the media receiving device 2 is shown in (c), and an output (reception SDI #1", reception SDI #2") of the SDI signal transmission circuit 214 of the media receiving device 2 is shown in (d). Further, an output timing of the SDI signal of a general media receiving device is shown in (f) as a comparative example.

Although FIGS. 7 and 8 show a case of two channels as an example, but without limitation thereto. The same applies to three or more channels.

As shown in FIG. 7, on the transmitting side, as a first step, the PTP timing generation circuit 12 of the media transmitting device 1 generates a PTP timing and supplies it to the media generating unit 3 (not shown) (S70). The media generating unit 3 generates the transmission SDI #1 and the transmission SDI #2 including video, audio, and auxiliary data based on the supplied GenLock, and inputs them to the media transmitting device 1. GenLock is a video synchronization signal based on SMPTE_EPOCH, and generates an alignment point. The media generator 3 configures SDI #1 and SDI #2 frames at the timing of the alignment point. SDI #1 and SDI #2 may be generated simultaneously by one device (media generator 3), or may be generated separately by a plurality of devices arranged at different locations. Due to generation based on GenLock, images and the like generated at the same time can be reproduced or synthesized at the same timing on the receiving side on which the media receiving device 2 is arranged.

The SDI signal reception circuit 111 of the media transmitting device 1 receives transmission SDI #1 and transmission SDI #2 (Fig. 7: S71, Fig. 8 (a)). In FIG. 8(a), transmission SDI #1 (SDI signal) includes frame 0 (#1), frame 1 (#1), frame 2 (#1) ..., and transmission SDI#2 (SDI signal) includes frame 0 (#2), frame 1 (#2), frame 2 (#2) .... Note that frame 0 (#1), frame 1 (#1), and frame 2 (#1) of transmission SDI#1 indicate the order of frames input to channel #1 of the media transmitting device 1. Frame 0 (#2), frame 1 (#2), and frame 2 (#2) of transmission SDI #2 indicate the order of frames input to channel #2 of the media transmitting device 1. Therefore, for example, frame 0 (#1) and frame 0 (#2) are different frames.

Each frame is generated at timing T0, T1, T2 ... of an alignment point based on GenLock supplied to the media generating unit 3, and supplied to the SDI signal reception circuit 111 at each timing. That is, timing T0, T1, T2 ... of an alignment point is associated with frame 0 (#1), frame 0 (#2), frame 1 (#1), frame 1 (#2), frame 2 (#1), frame 2 (#2) ... of each SDI signal.

Assuming that the frame rate is 59.94 Hz, the frame period is 1/59.94 Hz, whereby the count number of a 90 kHz clock can be expressed as 1/59.94×90,000=1501.50150150150... counts per period. In FIG. 8 (a), it is abbreviated as 1501.5 counts.

Next, the RTP packetization circuit 112 converts transmission SDI#1 and transmission SDI #2 into RTP packet #1 and RTP packet #2, respectively (S72 in FIG. 7). This conversion is generally called encapsulation (Encap). The time stamping circuit 113 sets time stamps on RTP packet #1 and RTP packet #2 (S73 in FIG. 7), and generates transmission RTP stream #1 and transmission RTP stream #2. The IP signal transmission circuit 114 transmits transmission IP #1 and transmission IP #2 obtained by converting transmission RTP stream #1 and transmission RTP stream #2 into IP packets to the network (Fig. 7: S74, Fig. 8 (b)).

The time stamp applying method of the time stamping circuit 113 will be described below with reference to FIG. 8.

First, all RTP packets in frame 0 (#1) of channel #1 are stamped with a count value CT0 corresponding to the time T0 at which frame 0 of transmission SDI#1 is associated with an alignment point. Then, all RTP packets in frame 0 (#2) of channel #2 are also stamped with the same CT0.

Next, all RTP packets in frame 1 (#1) of channel #1 are stamped with a count value CT1 corresponding to the time T1 at the alignment point. Then, all RTP packets in frame 1 (#2) of channel #2 are also stamped with the same CT1. Further, all RTP packets in frame 2 (#1) of channel #1 are stamped with a count value CT2 corresponding to the time T2 at the alignment point. Then, all RTP packets in frame 2 (#2) of channel #2 are also stamped with the same CT2. The same applies thereafter.

For example, when the frame period is 1/59.94 Hz and the clock is 90 kHz, the count value corresponding to one period is 1501.50150150150 ..., and a value obtained by integrating the count values for each frame is rounded off to generate CT0, CT1, CT2 .... Also in this embodiment, as described with reference to FIG. 3, as for the count difference of each frame, 1502 and 1501 alternate for a while, and 1502 may be repeated at a certain point in time. However, depending on the relationship between the frame rate and the counter clock, embodiments are not limited to an aspect of repetition as described above.

As described above, all the RTP packets of frames in the channels #1 and #2 are stamped so that the timing of the alignment point based on the SMPTE_EPOCH at the time of frame generation (in practice, a value converted to a clock value), rather than the time at which each frame is supplied to the SDI signal reception circuit 111 or the RTP packetization circuit 112, matches for the channels #1 and #2. This does not change even if there is a temporal fluctuation in the SDI signal received from the media generating unit 3. As a result, as shown in FIG. 8 (b), the output of the IP signal transmission circuit 114 shows that the time stamp values of the transmission IP #1 and transmission IP #2 are the same at the same frame timing.

Thus, even when there is a delay difference between the SDI signals of the plurality of flows that are input to the media transmitting device 1, or even when there is jitter in the SDI signals of the respective flows, the same time stamp is stamped without being different between the flows at the same frame timing.

Returning to FIG. 7, each of the transmission IP #1 and the transmission IP #2 that are output from the media transmitting device 1 to the network are input to the IP signal reception circuit 211 of the media receiving device 2 (S75 in FIG. 7). Generally, when the IP signals of the plurality of flows pass through the network, as shown in FIG. 8(c), a transmission delay difference may occur between theflows. The IP signals that are input to the IP signal reception circuit 211 are denoted as reception IP #1 and reception IP #2. FIG. 8(c) shows how reception IP #1 is input before reception IP #2.

The RTP depacketization circuit 212 depacketizes reception IP #1 and reception IP #2 at a Decap start timing and converts them into reception SDI #1 and reception SDI #2 (Fig. 7: S76 and S77). This conversion is generally called de-encapsulation (Decap). The PTP timing generator 22 generates the PTP timing and supplies it to each circuit (S80 in FIG. 7).

FIG. 8(c) shows an example in which a Decap start instruction timing is provided immediately after the reception of frame 1 (#1) of the reception IP #1 and immediately before the reception of frame 1 (#2) of the reception IP #2. In this case, in the reception IP #1, the data for converting the RTP packet to the SDI signal is available after frame 2 (#1), and in the reception IP #2, the data for converting the RTP packet to the SDI signal is available after frame 1 (#2). A Decap start instruction can be issued by a user, for example.

Therefore, as shown in FIG. 8(d), the reception SDI #1" and the reception SDI #2" that are finally output from the SDI signal transmission circuit 214 after the conversion to the SDI signal are after frame 2 (#1) and after frame 1 (#2), respectively. At this point, the offset control circuit 213 sets an offset to the output timing of each frame (S78 in FIG. 7). Thus, frames of the channels are immediately output at a timing obtained by adding an offset to the alignment point corresponding to the time stamp applied to the frame (S79 in FIG. 7).

Specifically, frame 2 (#1) of reception SDI#1" is output at timing of time T2 + offset, and frame 3 (#1) is output at timing of time T3 + offset. Frame 1 (#2) of reception SDI #2" is output at timing of time T1 + offset, frame 2 (#2) is output at timing of time T2 + offset, and frame 3 (#2) is output at timing of time T3 + offset.

It should be noted that, as described with reference to FIG. 4, the offset is a time obtained by adding an additional time in consideration of a variation in transmission delay to the total delay time (processing time + transmission delay). Further, each reception SDI signal waits until its output timing in a buffer circuit (not shown) in the offset control circuit 213.

According to the SMPTE ST2110 standard or SMPTE ST2022-8 standard, a general SDI signal is output at timing of the next alignment point after the time when the data is complete (FIG. 8 (f)). That is, in the channel #1, frame 2 (#1) is output at time T3, frame 3 (#1) is output at time T4, and in the channel #2, frame 1 (#2) is output at time T2, frame 2 (#2) is output at time T3, and frame 3 (#2) is output at time T4.

However, in this embodiment, it is possible to output the SDI signal in a plurality of channels at timing obtained by adding an offset to the alignment point that is associated when the frame of the SDI signal is generated, without waiting for the timing of the next alignment point. Therefore, in this embodiment, the delay to the output can be reduced as compared with a general system.

In the case of multilink transmission over multiple channels, the offset setting prevents the frame reproduction timing from being shifted on the receiving side, and high-precision frame synchronization output can be obtained.

The accuracy of the output timing to the nanosecond order is possible because the PTP time based on SMPTE_EPOCH is used. Also, as shown in FIG. 8, even when a transmission delay difference occurs depending on the transmission path, the output timing of the frames of each channel can be matched with high precision by setting the offset corresponding to the maximum transmission delay. Thus, on the receiving side that reproduces the SDI signal output by the media receiving device 2, the video on the transmitting side can be restored with higher quality. That is, even when the video signal is divided into a plurality of parts for multilink transmission, high-quality video and audio can be restored without causing any disturbance in the screen on the receiving side.

In the media transmitting device 1 on the transmitting side, the time stamp values of frames are made equal in the multilink. Therefore, even if the output timing of the media receiving device 2 on the receiving side is not a timing obtained by adding an offset to an alignment point, but a timing obtained by adding an offset to a time calculated directly from a time stamp value, the output timing is not shifted.

### Third Embodiment

A third embodiment is another embodiment of multilink transmission.

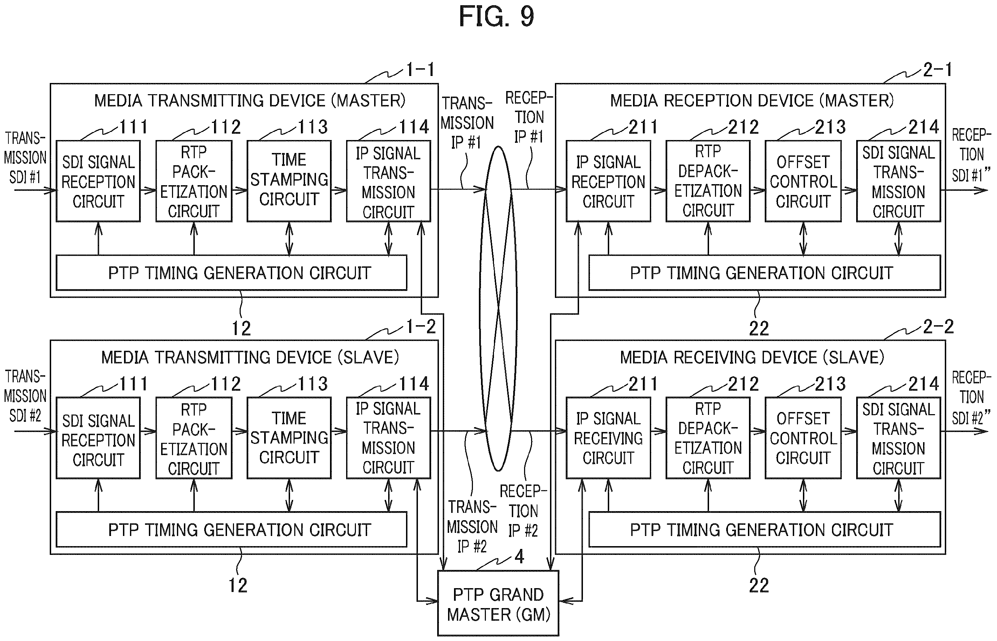

FIG. 9 is a diagram showing a configuration of a media transmission system according to the third embodiment of the present disclosure. The illustrated media transmission system is an example in which one channel of the media transmitting device and one channel of the media receiving device are configured in two sets in parallel.

The components of each device are the same as those of the first embodiment except for the management time described later. In the second embodiment, an example of multi-link of a plurality of channels for a set of media transmitting device and media receiving device is shown. This embodiment shows an example of a multilink in which a plurality of channels are configured by a plurality of sets of media transmitting devices and media receiving devices.

This system is considered to be useful for HFR transmission with a high frame rate. For example, a 4K/119.88p transmission system is configured by 8 sets when 3G-SDI 1 is configured by one set. It is also applicable when 8K/119.88p is configured by 8 sets of 12G-SDI.

This embodiment shows, for convenience of explanation, a case in which HFR video transmission is configured by 2 sets.

In the media transmission system shown in FIG. 9, a media transmitting device 1-1 and a media receiving device 2-1 are positioned as master side devices, and a media transmitting device 1-2 and a media receiving device 2-2 are positioned as slave side devices. In the media transmitting device 1-1 and the media receiving device 2-1 on a master side, the current time acquired by the PTP time based on SMPTE_EPOCH is operated as the management time for each frame of the SDI signal. In the media transmitting device 1-2 and the media receiving device 2-2 on a slave side, the time advanced by 1 frame or delayed by 1 frame from the management time on the master side is operated as the management time. The management time indicates a time associated with a frame.

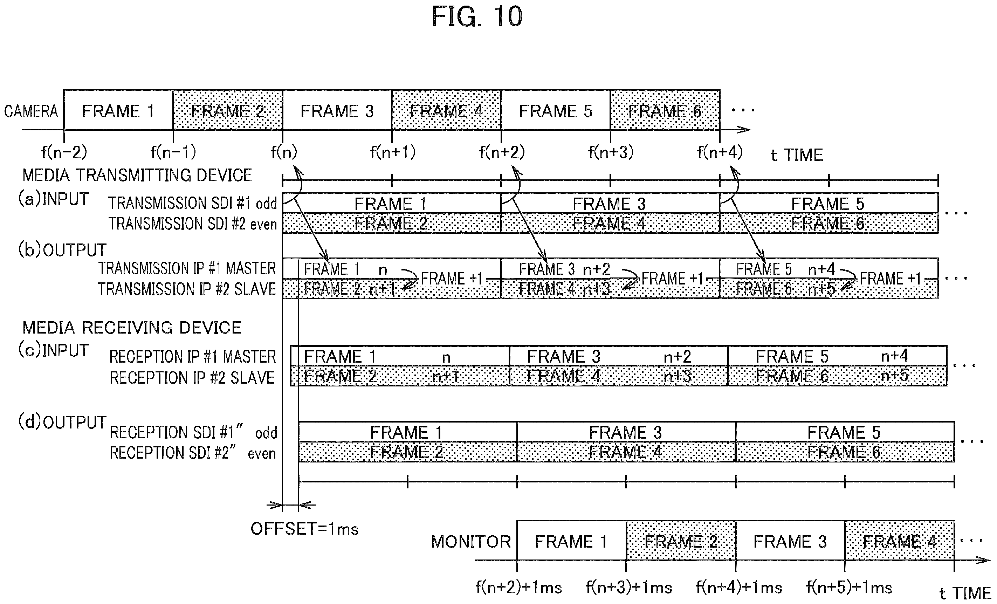

FIG. 10 is a diagram illustrating operation of the media transmission system according to this embodiment. FIG. 10 shows a case in which, among frames (1), (2), (3) ... of the SDI signal generated by the media generating unit 3 (hereinafter, referred to as "camera"), odd numbered frames (1), (3) ... are input to the media transmitting device 1-1 on the master side, and the even numbered frames (2), (4) ... are input to the media transmitting device 1-2 on the slave side. Thus, by transmitting the odd numbered frame and the even numbered frame by the two sets of transmitting and receiving devices at the same time (odd/even transmission), the load (transmission speed) per set of transmitting and receiving devices can be reduced.

In FIG. 10, n, n+1 ... are time stamp values, and here, values (integers) simulating the order of frames are used, and the increment of the time stamp for one period (1/119.88×90,000=750.750750 ...) is set to 1. Further, f(n) indicates the PTP time (alignment point) based on the SMPTE_EPOCH of a time stamp value n. According to this, frames (1), (2), (3) ... from the camera are output at the timing of time f(n-2), f(n-1), f(n) ....

As shown in FIG. 10 (a), outputs from the camera are divided into odd numbered frames and an even numbered frames and input to the media transmitting device 1-1 and 1-2, respectively. Frames (1), (3) ... which are input to the SDI signal reception circuit 111 of the media transmitting device 1-1 on the master side are designated as transmission SDI #1. Frames (2), (4) ... which are input to the SDI signal reception circuit 111 of the media transmitting device 1-2 on the slave side are designated as transmission SDI #2. A transmission speed of transmission SDI #1 and transmission SDI #2 is halved compared to the case in which the odd numbered frames and even numbered frames are consecutive, and frame (1) and (2) are input to the SDI signal reception circuits 111 at the same timing and at the same rate. The same applies to frames (3) and (4), frames (5) and (6), and subsequent frames.

Each frame is RTP packetized by the RTP packetization circuit 112, and a time stamp is stamped by the time stamping circuit 113. FIG. 10 (b) shows images of transmission IP #1 and transmission IP #2 that are time stamped and output from the IP signal transmission circuit 114. At this point, all the RTP packets of the frame (1) are stamped with the time stamp value n of the time f (n) associated with the frame (1) in the time stamping circuit 113 on the master side. The time f (n) is the above-mentioned management time. In the slave side time stamping circuit 113, a time stamp value n+1 advanced by 1 (time stamp increment of one period) with respect to the time stamp value n of the master side frame (1) is stamped as the time stamp value of the frame (2).

Furthermore, as the time stamp value of frame (3) on the master side, a time stamp value n+2 of the time f (n+2) associated with the frame (3) is stamped. As a time stamp value of the frame (4) on the slave side, a time stamp value n+3 advanced by 1 with respect to the time stamp value n+2 of the frame (3) on the master side is stamped. Similarly, as a time stamp value of the frame (5) on the master side, a time stamp value n+4 is stamped, and as a time stamp value of the frame (6) on the slave side, a time stamp value n+5 advanced by 1 with respect to the time stamp value n+4 of the frame (5) on the master side is stamped.

The RTP packets stamped with the time stamp in the time stamping circuit 113 are output as the transmission IP #1 and the transmission IP #2 to the network via the IP signal transmission circuits 114.

Subsequently, as shown in FIG. 10 (c), the transmission IP #1 from the media transmitting device 1-1 on the master side passes through the network and is input as the reception IP #1 to the IP signal reception circuit 211 of the media receiving device 2-1 on the master side. The transmission IP #2 from the media transmitting device 1-2 on the slave side passes through the network and is input as the reception IP #2 to the IP signal reception circuit 211 of the media receiving device 2-2 on the slave side.

The reception IP #1 and the reception IP #2 are assembled into SDI signals by the RTP depacketization circuits 212 to become reception SDI #1 and reception SDI #2, respectively. At this point, the offset control circuits 213 on the master and slave sides set the same offset to the output timings of the respective frames. The offset is a time obtained by adding the maximum value of the transmission delay time and the processing time of both the master and slave networks. Specifically, each frame is output from the media receiving device 2-1 and the media receiving device 2-2 at a timing obtained by adding an offset to the alignment point corresponding to the time stamp of the master frame.

FIG. 10 shows an example when the offset is set to 1 ms.

In the output of the SDI signal transmission circuit 214 shown in FIG. 10 (d), frame (1) is output on the master side as reception SDI #1" at a timing of f (n) + offset. On the slave side, frame (2) is output as reception SDI #2" at a timing of f (n) + offset. Further, on the master side, the frame (3) is output at the timing of f (n+2) + offset. Further, on the slave side, the frame (4) is output at the timing of f (n+2) + offset. Subsequently, on the master side, the frame (5) is output at the timing of f (n+4) + offset. Further, on the slave side, the frame (6) is output at the timing of f (n+4) + offset. The same applies thereafter.

The monitor for reproducing the SDI signal reassembles and displays on the screen a pair of odd numbered and even numbered frames such as frames (1) and (2), frames (3) and (4), ... of the reception SDI #1" and reception SDI #2" which are output from the receiving device at the same timing, in the order of frames (1), (2), (3), (4) ....

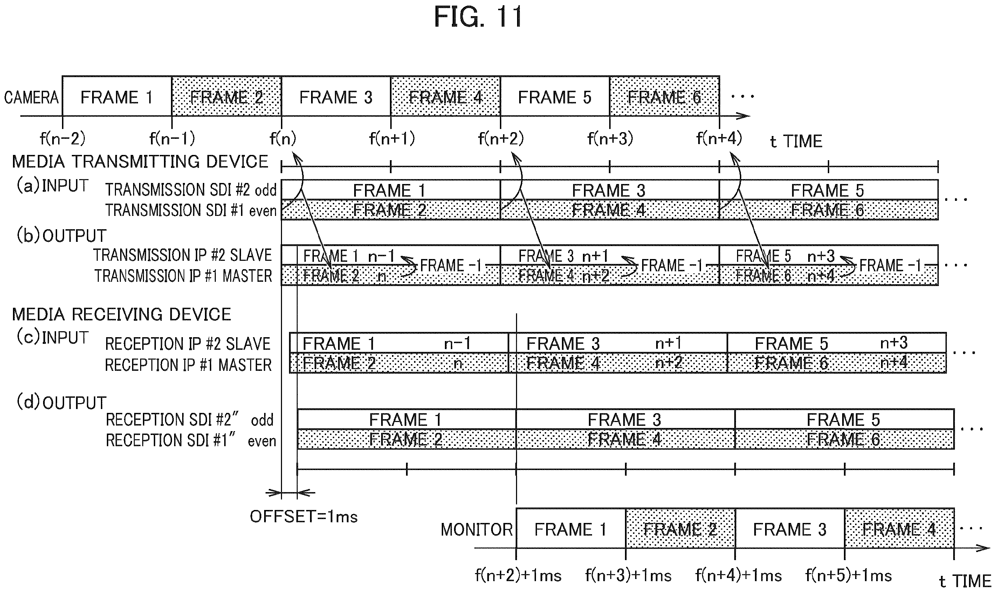

FIG. 11 is a diagram illustrating another operation of the media transmission system according to this embodiment. The operation of FIG. 11 shows a case in which the even numbered frames (2), (4) ... of the frames (1), (2), (3) ... generated by the camera are input to the media transmitting device 1-1 on the master side, and the odd numbered frames (1), (3) ... are input to the media transmitting device 1-2 on the slave side in the modified example of FIG. 10. In this case, as in FIG. 10, the odd numbered frame and the even numbered frame are simultaneously transmitted (odd/even transmission) by the two sets of transmitter and receiver, so that the load per set of transmitter and receiver can be reduced. The parameters in FIG. 11 are the same as those in FIG. 10. n, n+1, ... are time stamp values, where values (integers) simulating the order of the frames are used, and the increment of the time stamp in one period (1/119.88×90,000=750.750750 ...) is set to 1.

Also in FIG. 11, frames (1), (2), (3) ... from the camera are output at the timing of f (n-2), f (n-1), f (n) .... As shown in FIG. 11 (a), the outputs from the camera are divided into odd numbered frames and even numbered frames, and input to the media transmitting device 1-1, 1-2, respectively. Frames (2), (4) ..., which are input to the SDI signal reception circuit 111 on the master side (media transmitting device 1-1) are represented by transmission SDI #1. Frames (1), (3) ..., which are input to the SDI signal reception circuit 111 on the slave side (media transmitting device 1-2) are represented by transmission SDI #2. Also in FIG. 11, the transmission rates of transmission SDI #1 and transmission SDI #2 are halved compared to the case in which even and odd frames are input successively to one media transmitting device, and frames (1) and (2) are input to each SDI signal reception circuit 111 at the same timing and at the same rate. The same applies to frames (3) and (4), frames (5) and (6), and subsequent frames.

Each frame is RTP packetized by the RTP packetization circuit 112, and a time stamp is stamped by the time stamping circuit 113. FIG. 11 (b) shows images of the transmission IP#1 and transmission IP#2 output from the IP signal transmission circuit 114 after the time stamps are stamped. At this point, all the RTP packets of the frame (2) are stamped with the time stamp value n of the time f (n) associated with the frame (2) in the time stamping circuit 113 on the master side. In the time stamping circuit 113 on the slave side, n-1 is stamped as the time stamp value of the frame (1), which is a value delayed (a value traced back to the past) by 1 with respect to the time stamp value n of the frame (2) on the master side.

The time stamp value n+2 of the time f (n+2) associated with the frame (4) is stamped as the time stamp value of the frame (4) on the master side. As the time stamp value of the frame (3) on the slave side, n+1, which is a value delayed by 1 with respect to the time stamp value n+2 of the frame (4) on the master side is stamped. Similarly, the time stamp value n+4 is stamped as the time stamp value of the frame (6) on the master side, and n+3, which is a value delayed by 1 with respect to the time stamp value n+4 of the frame (6) on the master side is stamped as the time stamp value of the frame (5) on the slave side.

The RTP packets stamped with time stamps are converted into transmission IP #1 and transmission IP #2 via the respective IP signal transmission circuits 114, and are output to the network.

Subsequently, as shown in FIG. 11 (c), the transmission IP #1 transmitted from the media transmitting device 1-1 on the master side is input as reception IP #1 to the IP signal reception circuit 211 of the media receiving device 2-1 on the master side via the network. The transmission IP #2 transmitted from the media transmitting device 1-2 on the slave side is input as reception IP#2 to the IP signal reception circuit 211 of the media receiving device 2-2 on the slave side via the network.

The reception IP #1 and reception IP #2 are assembled into SDI signals by the RTP depacketization circuits 212, and are converted into reception SDI #1 and reception SDI #2, respectively. At this point, the offset control circuits 213 on the master and slave side set the same offset to the output timing of the respective frames. The offset is a time obtained by adding the maximum value of the network transmission delay time and the processing time on both the master and slave sides. Specifically, the respective frames are output from the media receiving device 2-1 and the media receiving device 2-2 at the timing obtained by adding the offset to the alignment point corresponding to the time stamp of the frame on the master side.

FIG. 11 shows an example in which the offset is set to 1 ms.

In the output of the SDI signal transmission circuit 214, frame (2) is output on the master side as reception SDI #1" at a timing of f (n) + offset. On the slave side, frame (1) is output as reception SDI #2" at a timing of f (n) + offset. Further, on the master side, frame (4) is output at a timing of f (n+2) + offset. Further, on the slave side, frame (3) is output at a timing of f (n+2) + offset. Subsequently, on the master side, frame (6) is output at a timing of f (n+4) + offset. Further, on the slave side, frame (5) is output at a timing of f (n+4) + offset. The same applies thereafter.

The monitor for reproducing the SDI signal reassembles and displays on the screen a pair of odd numbered and even numbered frames such as frames (1) and (2), frames (3) and (4), ... of the reception SDI #1" and reception SDI #2" which are output from the receiving device at the same timing, in the order of frames (1), (2), (3), (4) ....

The media transmission system according to this embodiment as described above includes a plurality of sets of media transmitting device and media receiving device, the plurality of sets includes a set for a master flow and a set for at least one slave flow, and a video signal (SDI signal) is divided into a master flow and at least one slave flow and transmitted. In each media transmitting device 1, a video signal reception circuit 111 receives a video signal of its own flow. Then, a packetization circuit 112 converts the received video signal into a plurality of packets. The time stamping circuit 113 applies a time stamp corresponding to the timing of the alignment point set to the frame corresponding to the packet when its own flow is a master flow, and applies to the packet a time stamp at least one frame ahead or behind the time stamp applied in the master flow is applied to the packet when its own flow is a slave flow. Further, an IP signal transmission circuit 114 transmits the packet to which the time stamp is applied as an IP signal. In each media receiving device, an IP signal reception circuit 211 receives the packet of its own flow. Then, a depacketization circuit 212 reproduces a frame from the received packet. An offset control circuit 213 outputs the reproduced frame at an output timing obtained by adding a predetermined offset value to the alignment point of the time stamp applied to the corresponding packet when its own flow is a master flow, and outputs the reproduced frame at an output timing obtained by adding the offset value to the alignment point of the time stamp of the master flow when its own flow is a slave flow. Further, the video signal transmission circuit 214 outputs the frame output from the offset control circuit 213 as a video signal.

As described above, this embodiment shows a configuration in which a plurality of sets of media transmitting device and media receiving device perform multilink transmission of video signals received from the outside. In this embodiment, if two sets of media transmitting device and media receiving device are used to separately transmit even numbered frames and odd numbered frames when HFR transmission with a high frame rate is performed, each of them can be transmitted at a half rate. In this case, one channel is set as a master and the other channel is set as a slave, and the time held by the slave device is advanced or delayed from the accurate time synchronized by the PTP held by the master device. As a result, it is possible to perform control so that the RTP time stamps of each stream of multilink transmission transmitted and received between the media transmitting device and media receiving device are in the correct order even in the multilink.

In this embodiment, the time stamp of the media transmitting device is not stamped at the capture time at the time of reception of each frame, but stamped at the timing of the alignment point based on the SMPTE_EPOCH at the time of frame generation. This makes it possible to set a time stamp value to an appropriate value even for multiple systems. By reducing the rate to 1/2 in high-speed IP transmission by providing two sets of transmitting and receiving devices, it is possible to prevent deterioration in quality and to transmit and receive HFR video signals even on devices that do not support HFR.

Further, in the media receiving device, the output of the frame of the SDI signal is provided with an offset to allow an output without waiting for the next alignment point, so that the output delay of the media receiving device can be reduced.

This embodiment is not limited to the configuration shown in FIG. 9, but can also be achieved in the configuration of the second embodiment shown in FIG. 6. In this case, one of the plurality of channels serves as a master, and the remaining channels serve as slaves. The respective operations are the same as those shown in FIGS. 10 and 11.

FIG. 9 shows a configuration example of two sets of media transmitting device and media receiving device, but without limitation thereto. In the case of m sets of media transmitting device and media receiving device, it is possible to transmit frames for every m. For example, in the case of m sets of media transmitting device and media receiving device, it is possible to simultaneously transmit the nth frame, the (n+1)th frame, the (n+2)th frame, ... , and the (n+m-1)th frame. That is, frames of m flows can be processed in parallel. In this case, the transmission rate of each set can be reduced to 1/m, and the device configuration can be simplified. Alternatively, if the transmission rate of each set is maintained, video data of m times the capacity can be transmitted.

For example, when the SDI signal (video signal) is divided into m flows and transmitted, the nth frame flow is the master flow, and the (n+1)th to (n+m-1)th frame flows after the master flow are slave flows, the time stamping circuit 113 applies a time stamp of a time later than the time stamp applied in the master flow to the packet if its own flow is the slave flow.

Further, when the SDI signal is divided into m flows and transmitted, the nth frame flow is the master flow, and the (n-1)th to (n-m+1)th frame flows before the master flow are slave flows, the time stamping circuit 113 applies a time stamp of a time earlier than the time stamp applied in the master flow to the packet if its own flow is the slave flow.

This embodiment is not limited to the configuration in FIG. 9, and may be combined with the configuration of the second embodiment shown in FIG. 6. That is, the slave device may be kept at an accurate time synchronized by the same PTP as the master device, and multilink transmission of signal flows of a plurality of channels, which is not sufficient by the SDI interface of one set of transmitting device and receiving device as in the second embodiment, may be achieved by a plurality of sets of transmitting device and receiving device as in the third embodiment.

For example, if four transmission/reception channels are realized in the second embodiment and two sets of transmitting/receiving devices are realized in the third embodiment, a total of eight multilink transmission channels can be realized. A wide video transmission system of 7680 horizontal pixels × 2160 vertical pixels can be achieved by realizing Quad 3G-SDI (3Gbps transmission × 4 channels) in the configuration of the second embodiment and preparing two sets in the configuration of the third embodiment. However, in this case, the time stamp of the slave is the same as that of the master.

In a general transmission system, after an IP packet (media packet) arrives at a media receiving device, it is not output until the next frame period based on the SMPTE EPOCH. However, in the media transmission systems in the first to third embodiments described above, it is possible to output at any timing without waiting until the next frame period, and a low-delay output can be achieved.

Moreover, in the media transmission systems according to the second and third embodiments, when transmitting a highly realistic 8 K video image or the like as a plurality of digital signals via a multilink, it is possible to output within the phase difference defined by the SMPTE ST2082-12 or the like. Thus, even in the transmission of a remote chorus or ensemble requiring high real-time performance, it is possible to synthesize a plurality of parts at the receiving side without shift and with low delay. Furthermore, even in the case of bidirectional communication, it is possible to achieve smooth communication without feeling any delay.

### Hardware Configuration

A general-purpose computer system can be used for the above-described media transmitting device and media receiving device. The computer system includes, for example, a CPU (Central Processing Unit, processor), a memory, a storage (Hard Disk Drive: HDD; Solid State Drive: SSD), a communication device, an input device, and an output device. The memory and the storage are storage devices. In this computer system, each function of the media transmitting device and the media receiving device is achieved by executing a program for the media transmitting device loaded on the memory or a program for the media receiving device 2.

The media transmitting device and the media receiving device may be implemented by one computer or multiple computers. The media transmitting device and the media receiving device may be virtual machines implemented in a computer. A program for the media transmitting device and a program for the media receiving device can be stored in a computer-readable recording medium such as an HDD, SSD, an USB (Universal Serial Bus) memory, Compact Disc (CD), DVD (Digital Versatile Disc), or distributed over a network. The computer-readable recording medium is, for example, a non-transitory recording medium.

It should be noted that the present disclosure is not limited to the above embodiments and modified examples, and various modifications are possible within the scope of the gist thereof.

### Reference Signs List

1: Media transmitting device (transmitting device)
11: SDI/IP conversion circuit
111: SDI signal reception circuit
112: RTP packetization circuit
113: Time stamping circuit
114: IP signal transmission circuit
12: PTP timing generation circuit
2: Media receiving device (receiving device)
21: IP/SDI conversion circuit
211: IP signal reception circuit
212: RTP depacketization circuit
213: Offset control circuit
214: SDI signal transmission circuit
22: PTP timing generation circuit
3: Media generating unit
4: PTP grand master (GM)

## Claims

1. A media transmission system comprising a transmitting device and a receiving device,
the transmitting device comprising:
a video signal reception circuit that receives a video signal generated with each frame corresponding to timing of an alignment point based on SMPTE_EPOCH;
a packetization circuit that converts the video signal into a plurality of packets in frames;
a time stamping circuit that applies a time stamp corresponding to the timing of the alignment point set to the corresponding frame at the time of generation to each packet; and
an IP signal transmission circuit that transmits each packet to which the time stamp is applied as an IP signal;
the receiving device comprising:
an IP signal reception circuit that receives the packet;
a depacketization circuit that reproduces a frame of the video signal from the received packets;
an offset control circuit that outputs the reproduced frame at an output timing obtained by adding a predetermined offset to an alignment point of the time stamp applied to the corresponding packets; and
a video signal transmission circuit that outputs the frame output from the offset control circuit as the video signal.

2. The media transmission system according to claim 1, wherein:
the video signal is divided into a plurality of flows and transmitted to the transmitting device;
in the transmitting device,
the video signal reception circuit receives video signals of a plurality of flows,
the packetization circuit converts the video signals of each flow into a plurality of packets,
the time stamping circuit applies a time stamp corresponding to the timing of the alignment point set to the corresponding frame to the packets of each flow, and
the IP signal transmission circuit transmits the packets of each flow to which the time stamp is applied as an IP signal; and
in the receiving device,
the IP signal reception circuit receives the packets of each flow,
the depacketization circuit reproduces the frames of each flow from the packets of each flow,
the offset control circuit outputs a frame of each reproduced flow at an output timing obtained by adding a predetermined offset value to an alignment point of the time stamp applied to the corresponding packet, and
the video signal transmission circuit outputs a frame of each flow output from the offset control circuit.

3. The media transmission system according to claim 1 or 2, comprising a plurality of sets of the transmitting device and the receiving device.

4. The media transmission system according to claim 1, comprising a plurality of sets of the transmitting device and the receiving device,
wherein:
the plurality of sets includes a set for a master flow and a set for at least one slave flow, and
the video signal is divided into the master flow and the at least one slave flow and transmitted;
in each transmitting device,
the video signal reception circuit receives a video signal of its own flow,
the packetization circuit converts the received video signal into a plurality of packets,
the time stamping circuit applies to the packet a time stamp corresponding to the timing of the alignment point set to the frame corresponding to the packet when its own flow is a master flow, and applies to the packet a time stamp at least one frame ahead or behind the time stamp applied in the master flow is applied to the packet when its own flow is a slave flow, and
the IP signal transmission circuit transmits the packet to which the time stamp is applied as an IP signal; and
in each receiving device,
the IP signal reception circuit receives the packet of its own flow,
the depacketization circuit reproduces a frame from the received packet,
the offset control circuit outputs the reproduced frame at an output timing obtained by adding a predetermined offset value to the alignment point of the time stamp applied to the corresponding packet when its own flow is a master flow, and outputs the reproduced frame at an output timing obtained by adding the offset value to the alignment point of the time stamp of the master flow when its own flow is a slave flow, and
the video signal transmission circuit outputs the frame output from the offset control circuit as a video signal.

5. The media transmission system according to claim 4, wherein, when the video signal is divided into m flows and transmitted, the nth frame flow is a master flow, and the (n+1)th to (n+m-1)th frame flows after the master flow are slave flows, the time stamping circuit applies a time stamp of time later than the time stamp applied in the master flow to the packet if its own flow is the slave flow.

6. The media transmission system according to claim 4, wherein, when the video signal is divided into m flows and transmitted, the nth frame flow is a master flow, and the (n-1)th to (n-m+1)th frame flows before the master flow are slave flows, the time stamping circuit 113 applies a time stamp of a time earlier than the time stamp applied in the master flow to the packet if its own flow is the slave flow.

7. A transmitting device in a media transmission system including a transmitting device and a receiving device, comprising:
a video signal reception circuit that receives a video signal generated with each frame corresponding to timing of an alignment point based on SMPTE _EPOCH;
a packetization circuit that converts the video signal into a plurality of packets in frames;
a time stamping circuit that applies a time stamp corresponding to the timing of the alignment point set to the corresponding frame at the time of generation to each packet; and
an IP signal transmission circuit that transmits each packet to which the time stamp is applied as an IP signal.

8. The transmitting device according to claim 7, wherein:
the video signal is divided into a plurality of flows and transmitted;
the video signal reception circuit receives video signals of a plurality of flows;
the packetization circuit converts the video signals of each flow into a plurality of packets;
the time stamping circuit applies a time stamp corresponding to the timing of the alignment point set to the corresponding frame to the packets of each flow; and
the IP signal transmission circuit transmits the packets of each flow to which the time stamp is applied as an IP signal.

9. A transmitting system comprising a plurality of the transmitting devices according to claim 7,
wherein:
the plurality of the transmitting devices includes a transmitting device for a master flow and a transmitting device for at least one slave flow, and
the video signal is divided into the master flow and the at least one slave flow and transmitted; and
in each transmitting device,
the video signal reception circuit receives a video signal of its own flow,
the packetization circuit converts the received video signal into a plurality of packets,
the time stamping circuit applies to the packet a time stamp corresponding to the timing of the alignment point set to the frame corresponding to the packet when its own flow is a master flow, and applies to the packet a time stamp at least one frame ahead or behind the time stamp applied in the master flow is applied to the packet when its own flow is a slave flow, and
the IP signal transmission circuit transmits the packet to which the time stamp is applied as an IP signal.

10. A receiving device in a media transmission system including a transmitting device and a receiving device, comprising:
an IP signal reception circuit that receives from the transmitting device a packet of a video signal generated with each frame corresponding to timing of an alignment point based on SMPTE_EPOCH, wherein a time stamp corresponding to the timing of the alignment point set to the corresponding frame at the time of generation is applied to the packet;
a depacketization circuit that reproduces a frame of the video signal from the received packet;
an offset control circuit that outputs the reproduced frame at an output timing obtained by adding a predetermined offset to an alignment point of the time stamp applied to the corresponding packet; and
a video signal transmission circuit that outputs the frame output from the offset control circuit as the video signal.

11. The receiving device according to claim 10, wherein:
the video signal is divided into a plurality of flows and transmitted;
the IP signal reception circuit receives the packets of each flow;
the depacketization circuit reproduces the frames of each flow from the packets of each flow;
the offset control circuit outputs a frame of each reproduced flow at an output timing obtained by adding a predetermined offset value to an alignment point of the time stamp applied to the corresponding packet; and
the video signal transmission circuit outputs a frame of each flow output from the offset control circuit.

12. A receiving system comprising a plurality of the receiving devices according to claim 10, wherein:
the plurality of the receiving devices includes a receiving device for a master flow and a receiving device for at least one slave flow; and
in each receiving device,
the IP signal reception circuit receives the packet of its own flow,
the depacketization circuit reproduces a frame from the received packet,
the offset control circuit outputs the reproduced frame at an output timing obtained by adding a predetermined offset value to the alignment point of the time stamp applied to the corresponding packet when its own flow is a master flow, and outputs the reproduced frame at an output timing obtained by adding the offset value to the alignment point of the time stamp of the master flow when its own flow is a slave flow, and
the video signal transmission circuit outputs the frame output from the offset control circuit as a video signal.
